Europäisches Patentamt

European Patent Office

Office européen des brevets

(11) Veröffentlichungsnummer: 0 362 499
A1

## EUROPÄISCHE PATENTANMELDUNG

(21) Anmeldenummer: 89112910.8

(22) Anmeldetag: 14.07.89

(51) Int. Cl.⁵: B65G 15/44

(30) Priorität: 29.09.88 DE 3833034

(43) Veröffentlichungstag der Anmeldung:
11.04.90 Patentblatt 90/15

(84) Benannte Vertragsstaaten:
AT BE CH DE ES FR GB GR IT LI LU NL SE

(71) Anmelder: FIRMA ERNST SIEGLING
Lilienthalstrasse 6/8
D-3000 Hannover 1(DE)

(72) Erfinder: Herzke, Harry
Allensteiner Weg 11
D-3000 Hannover 51(DE)

(74) Vertreter: Polzer, Alfred
Bahnhofstrasse 3
D-3000 Hannover 1(DE)

(54) Fördervorrichtung.

(57) Die Erfindung bezieht sich auf eine Fördervorrichtung nach dem Oberbegriff des Anspruches 1.

Um bei wechselnder Transportrichtung eine
übermäßige Belastung der Anschläge sowie Schwingungen des Transportbandes zu verhindern, wird bei
der Fördervorrichtung nach dem Oberbegriff des
Anspruches 1 vorgeschlagen, durch Einschnitte in
dem Transportband (1) Leschen (4) mit zwei Längskanten (4a) und zwei quer dazu verlaufenden Übergangskanten (4b) auszubilden, die die Anschläge (3)
aufnehmen.

FIG.1

## Fördervorrichtung

Die Erfindung bezieht sich auf eine Fördervorrichtung nach dem Oberbegriff des Anspruches 1.

Die ältere, nicht vorveröffentlichte deutsche Patentanmeldung P 38 13 331.8 zeigt eine Fördervorrichtung, bestehend aus einem um Umlenkrollen geführten endlosen, elastischen Transportband, mit in Längsrichtung desselben mit Abstand zueinanderliegenden parallelen Einschnitten, zwischen denen auf der Transportfläche jeweils ein Anschlag angeordnet ist, gegen den das Transportgut im Falle des Rutschens anschlägt, wobei das rücklaufende Trum des Transportbandes sich auf eine Führung, z.B. mit Abstand zueinanderliegende Rollen abstützt. Durch die Einschnitte in dem Transportband werden Zungen mit zwei Längskanten, einer Querkante und einer parallel zu dieser liegenden Übergangsseite gebildet, wobei die Anschläge im Bereich der Querkante der Zungen und in Transportrichtung gesehen hinter der Übergangsseite angeordnet sind.

Diese Fördervorrichtung hat sich im Prinzip als brauchbar herausgestellt, sofern die Transportrichtung nicht gewechselt wird. Wird hingegen mit wechselnder Transportrichtung gearbeitet, dann laufen die am rücklaufenden Trum des Transportbandes nach außen ragenden Anschläge gegen die Rollen auf und stauchen die Zungen bzw. beschädigen die Verbindungen der Anschläge mit den Zungen.

Die DE-Z. Gummi und Asbest, 1956, S. 73-75 zeigt eine Transportvorrichtung, bestehend aus einem um Umlenkrollen geführten, endlosen Transportband mit auf der Transportfläche mit Abstand zueinander liegenden Mitnehmern mit keilförmigen Auf- und Ablaufleisten, welche während der Bewegung des Transportbandes in einem der Wellenbewegung ähnlichen Lauf über die Rollen des Untertrums geführt werden. Die Mitnehmer bestehen dabei aus einem viereckigen Stab mit an beiden Enden vorgesehenen An- und Ablaufleisten und sind nach einer besonderen Ausführungsform halbkreis- oder winkelförmig ausgebildet, wobei sich die beiden Enden allmählich abflachen und auf diese Weise die keilförmigen Anlaufleisten bilden, während die Ablaufleiste durch einen zusätzlichen mittleren Keil gebildet ist. Nachteilig sind die periodischen Schwingungen des Transportbandes als Folge des ständigen Auflaufens der Mitnehmer gegen die Untertrum-Tragrollen. Hierdurch kann sehr empfindliches Transportgut beschädigt werden.

Hier setzt der Erfindungsgedanke ein. Die Erfindung geht von der Überlegung aus, durch Wahl geeigneter Mittel dafür zu sorgen, daß auch bei wechselnder Transportrichtung eine übermäßige Belastung der Anschläge sowie Schwingungen des Transportbandes verhindert werden.

Diese Aufgabe wird bei einer Fördervorrichtung nach dem Oberbegriff des Anspruches 1 dadurch gelöst, daß durch die Einschnitte in dem Transportband Laschen mit zwei Längskanten und zwei quer dazu verlaufenden Übergangsseiten ausgebildet sind, die die Anschläge aufnehmen.

Durch die erfindungsgemäße Maßnahme schwenken die Anschläge mit den sie tragenden Laschen beim Auflaufen in den zwischen dem vorlaufenden und dem rücklaufenden Trum des Transportbandes liegenden Raum ein, so daß kritische Beanspruchungen der Anschläge und der Laschen vermieden werden. Wenn sich der Anschlag über eine Rolle hinwegbewegt hat, so schwenkt er aufgrund der Elastizität der Lasche wieder in die Ausgangsstellung zurück, so daß die Lasche und der diese umgebende Teil des Transportbandes völlig bündig liegen.

Zweckmäßig liegen die Anschläge mittig zwischen den beiden Übergangskanten.

Nach einem weiteren Merkmal der Erfindung ist zwischen den Längskanten der Lasche und den diese umgebenden Kanten des Transportbandes ein Spalt vorgesehen.

Ein Ausführungsbeispiel der erfindungsgemäßen Fördervorrichtung ist nachstehend anhand der Zeichnung noch näher veranschaulicht. Diese zeigt in rein schematischer Weise:

Figur 1 eine Teilansicht der Fördervorrichtung gemäß der Erfindung,

Figur 2 eine Teildraufsicht in vergrößertem Maßstab auf die Anordnung nach Figur 1,

Figur 3 einen senkrechten Schnitt längs der Linie III-III.

Die Fördervorrichtung besteht aus einem um Umlenkwalzen geführten, endlosen, elastischen Transportband 1 mit der nach außen weisenden Transportfläche. Aus Gründen der Übersichtlichkeit ist lediglich die eine Umlenkwalze 2 dargestellt, die zweckmäßig antreibbar ist.

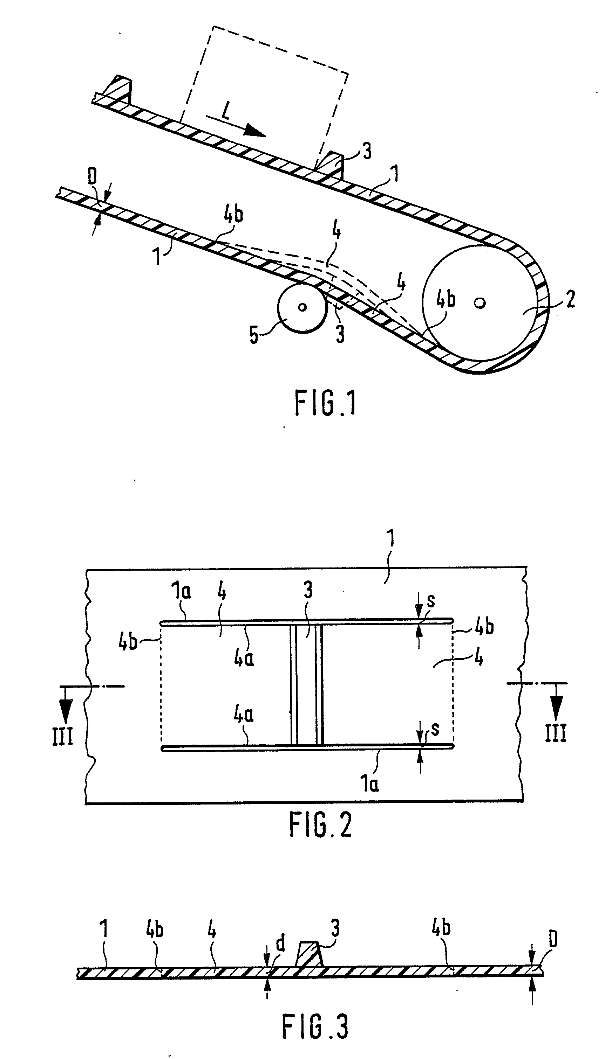

Die Laufrichtung des Transportbandes 1 ist mit L bezeichnet. Wie die Figur 1 zeigt, verläuft die Transportfläche des Transportbandes gegenüber der Horizontalen unter einem spitzen Winkel.

Mit 3 sind Anschläge angedeutet, welche in Längsrichtung des Transportbandes 1 mit Abstand zueinander angeordnet sind. Diese Anschläge 3 haben bei der dargestellten Auführungsform im Querschnitt die Form von Trapezen, können aber auch jede andere beliebige Form aufweisen. Es liegt im Rahmen der Erfindung, auch mehrere, in Querrichtung des Transportbandes 1 mit Abstand zueinanderliegende Anschläge 3 vorzusehen. Auch insoweit ist also der Erfindungsgedanke keineswegs beschränkt.

Einem jeden Anschlag 3 ist eine Lasche 4 mit den beiden Längskanten 4a sowie den beiden Querkanten 4b zugeordnet. Wie namentlich die Figuren 2 und 3 deutlich zeigen, gehen die Querkanten 4b in das Transportband so bündig über, daß keinerlei Stoßstellen zu verzeichnen sind.

Zwischen den Kanten 4a und 4b der Lasche 3 und den diese umgebenden Kanten 1a des Transportbandes 1 ist ein Spalt s vorgesehen, so daß ein reibungsfreies Durchbiegen der Lasche 4 möglich ist.

Zweckmäßig liegt der Anschlag 3 mittig zwischen den beiden Querkanten 4b.

Die Dicke d (Fig. 3) der Lasche 4 ist gleich der Dicke D des Transportbandes 1.

Wie aus Figur 1 ersichtlich, stützt sich das rücklaufende Trum des Transportbandes 1 auf eine Führung in Form von in Bewegungsrichtung des letzteren mit Abstand zueinanderliegenden Rollen ab, wobei aus Gründen der Übersichtlichkeit lediglich eine einzige Rolle 5 dargestellt ist.

Die Arbeitsweise der Fördervorrichtung nach den Figuren 1 - 3 ist die folgende:

Wenn das quaderförmige Stückgut längs der Transportfläche des Transportbandes 1 nach unten rutscht, legt sich ersteres gegen den entsprechenden Anschlag 3 an.

Beim Rücklauf schlägt der Anschlag 3 gegen die Rolle 5 an und bewegt sich zusammen mit der entsprechenden Lasche 4 bei der Weiterbewegung des rücklaufenden Trums des Transportbandes 1 in den zwischen Über- und Untertrum liegenden Raum, wie dies die Figur 1 mit einem gestrichelten Linienzug dargestellt ist.

Es ist klar, daß die Auflaufkante des Anschlages 3 zweckmäßig soausgebildet ist, daß der beim Aufprall entstehende Impuls auf ein Minimum herabgesetzt wird.

Hat des rücklaufende Trum des Transportbandes 1 den Bereich der Rolle 5 wieder verlassen, dann wird der Anschlag 3 wieder freigegeben, so daß er sich als Folge der Elastizität der Lasche 4 wieder in die Ausgangsstellung zurückbewegen kann, in welcher die Lasche 4 mit dem Transportband 1 vollständig bündig liegt.

## Ansprüche

1. Fördervorrichtung, bestehend, aus einem um Umlenkrollen (5) geführten endlosen, elastischen Transportband (1), mit in Längsrichtung desselben mit Abstand zueinanderliegenden parallelen Einschnitten, zwischen denen auf der Transportfläche jeweils ein Anschlag (3) angeordnet ist, gegen den das Transportgut im Falle des Rutschens anschlägt, wobei das rücklaufende Trum des Transportbandes (1) sich auf eine Führung, z. B. mit Abstand zueinanderliegende Rollen (5) abstützt, dadurch gekennzeichnet, daß durch die Einschnitte in dem Transportband (1) Laschen (4) mit zwei Längskanten (4a) und zwei quer dazu verlaufenden Übergangsseiten (4b) ausgebildet sind, die die Anschläge (3) aufnehmen.

2. Vorrichtung nach Anspruch 1, dadurch gekennzeichet, daß die Anschläge (3) mittig zwischen den beiden Übergangskanten (4b) liegen.

3. Vorrichtung nach Anspruch 1 und 2, dadurch gekennzeichnet, daß zwischen den Längskanten (4a) der Lasche (4) und den diese umgebenden Kanten (1a) des Transportbandes (1) ein Spalt (s) vorgesehen ist.

**FIG.1**

**FIG.2**

**FIG.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 162 727 (SUMMERS) * Fig. 4 * -- | 1 | B 65 G 15/44 |
| A | AT - B - 336 490 (SCHOLTZ) . * Fig. 2 * -- | 1 | |
| D,A | GUMMI UND PLASTISCHE MASSEN; Jahrgang 9, Heft 1, 1. Januar 1956, A.W. Gentner-Verlag, Stuttgart; Seiten 73-75: "Mitnehmerleisten für Förderbänder" * Seiten 75, Abb. 7 * ---- | 1 | |

| RECHERCHIERTE SACHGEBIETE (Int. Cl.4) |
|---|
| B 65 G |

Der vorliegende Recherchenbericht wurde für alle Patentansprüche erstellt.

| Recherchenort WIEN | Abschlußdatum der Recherche 06-12-1989 | . | Prüfer BAUMGARTNER |
|---|---|---|---|